# EUROPEAN PATENT SPECIFICATION

(11) **EP 0 917 814 B1**
(45) Date of publication and mention of the grant of the patent: **09.12.2009**
(21) Application number: 98305213.5
(22) Date of filing: 01.07.1998
(51) Int. Cl.: A01B 27/00, A01B 29/04, A01B 21/04

(54) **Agricultural implements**
Landwirtschaftliche Geräte
Outils agricoles

(30) Priority: 01.07.1997 GB 9713770
(43) Date of publication of application: 26.05.1999
(73) Proprietor: P A Bristow & Company, Heckington, Sleaford, Lincolnshire NG34 9JJ (GB)
(72) Inventor: Bristow, Peter Andrew, Sleaford, Lincolnshire, NG34 9JT (GB)
(74) Representative: Chave, Lynne Fiona

(56) References cited:
- EP-A- 0 345 899
- GB-A- 2 042 312
- US-A- 1 931 960

## Description

This invention relates to clod crushers. More specifically, the invention provides a clod crusher having improved performance with respect to tilth production, and especially with respect to tilth production from soils having a very high clod content.

Of course there are considerable numbers of implements intended for such a task, including power harrows driven by the tractor power take-off, both of the vertical axis rotor kind and those having a horizontal axis rotor. There are also many variations on the theme of mounted and semi-mounted and trailed harrows which have non power-driven soil-treating rotors and other elements.

However a major shortcoming of all such equipment known to the applicant is that it suffers either from the fact that in the worst conditions (and often in much less unfavourable conditions) this equipment requires several passes in the field in order to achieve an acceptable result. This comment applies particularly with respect to non power-driven harrows.

The alternative shortcoming alluded-to above in relation to power driven harrows is of course the inherent original equipment cost of such implements together with their attendant fuel costs.

I have discovered that there is an alternative to the currently-available equipment which seeks to reduce soil clod and particle size by, in most cases, a concept of abrasion and impact either by virtue of a pto-driven rotor or by means of rotors driven by ground-contact. As indicated above, such an approach is of limited effectiveness and some new technique is required in order to improve cost-effectiveness and technical effectiveness.

I have discovered that it is possible to adopt a technique of clod crushing whereby the weight of the implement itself can be used to produce a direct clod or particle size-reduction effect without the necessity to rely on a dynamic or impact effect, as in the case of the above-discussed previous harrow-type implements, whether using driven rotors or undriven ones.

According to the invention there is provided a clod crusher adapted to carry out soil particle size reduction, as defined in the accompanying claims.

In accordance with the general inventive principle of my invention, I provide a Packer rollers of this type are described in European Patent Number 0345899, UK Patent Number 2042312 and US Patent Number 0931960, in which a cylindrical drum is driven to compact a layer of soil by a plurality of blades or cams in which a rotor is adapted to effect a clod-crushing or particle-size-reduction effect (as opposed to a clod-cutting or clod-impacting effect) by defining clod-receiving recesses between projecting elements of the rotor. Clods are received in the recesses and, in use, can be crushed by the weight of the rotor and its associated structures.

To the best of the applicant's knowledge, the concept of utilising a clod-crushing rotor is relatively unknown, except in relation to simple cylindrical rollers, Cambridge rolls and the like which simply provide a direct rolling effect on the soil. Such may produce a degree of clod-crushing but the major effect is of soil compaction because there is (when a roller simply bears down on the earth by virtue of its weight) no means to hold a given clod against an unyielding support or surface. Therefore, any degree of yield (and there will usually be some in the structure of the soil) will prevent crushing occurring.

In accordance with the principles of my invention, this known crushing arrangement is reversed in the sense that I provide a roller which is so constructed that there is an inward crushing effect as opposed to an outward crushing effect. This is achieved by defining within the rotor clod-receiving recesses which, in use, receive clods and the thus-received clods are then crushed inwardly by the externally-applied inward pressure of the remainder of the soil or clods.

In the embodiments described below the clod-receiving recesses are defined by projecting elements which project outwardly from a generally central drum. The general structure and disposition of the projections is such that they co-operate with each other to define the clod-receiving recesses. So far as the clods are concerned, the arrangement is such that inward movement of the clods under the effect of the inwardly-directed crushing loads is prevented not only by the projections themselves but also by the drum structure itself. Lateral movement of any given clod is likewise limited or prevented by the adjacent projections.

In terms of general structure, the projections or projecting elements are so constructed and disposed that they cause the rotor somewhat to resemble a cylindrical brush, as viewed in the generally lengthwise direction of the rotor, and from above. The "bristles" of this "brush" are constituted by the projecting elements themselves which are of a rigid steel construction (and thus no brush-like flexibility is intended to be implied), but a proper understanding of the invention requires an appreciation of the general structure of the rotor and the distinctions between it and the many previously proposed rotors which have been used for various tillage operations. None however, to the best of the applicant's knowledge, has ever been used for a clod-crushing effect in this way. The above-discussed clod-receiving recesses are defined between the "bristles" of the brush and this structure differs in fundamental principle from previously known rotors having less closely-packed projecting elements, and which for that reason alone are incapable of producing any clod-crushing effect at all. Such rotors are mostly intended to produce a clod-abrading or shattering dynamic or kinetic effect by virtue of the rapidity of their (usually) driven rotation.

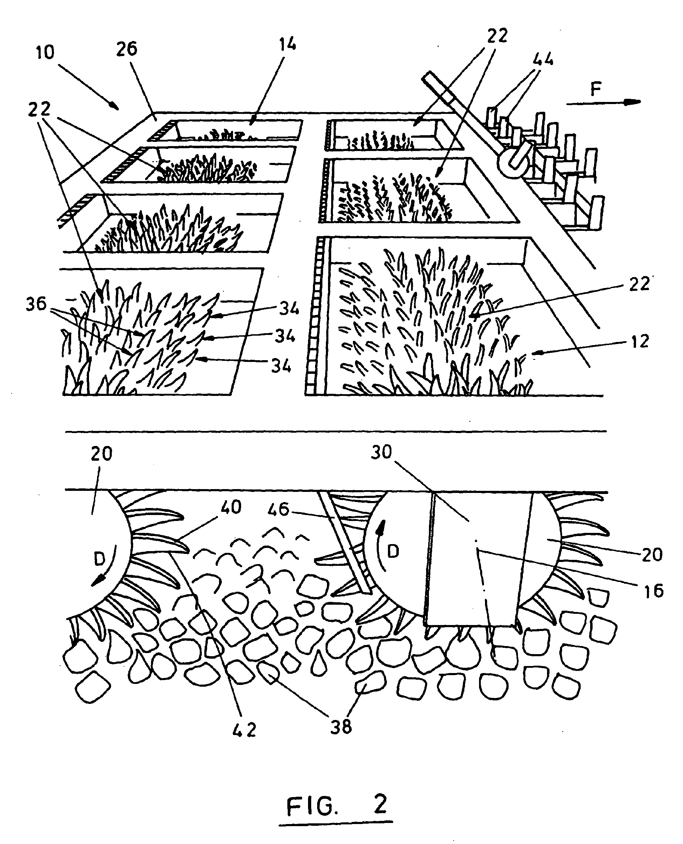

An example of such a device is disclosed in US 4,533,000 (Van der Lely) which shows an implement having a driven horizontal axis rotor which superficially resembles that of the present invention but has a construction and disposition of the projecting elements which differs fundamentally from that of the present invention in that no clod-receiving recesses are defined whatever. The implement operates by virtue of a kinetic or dynamic effect and not by clod crushing at all. In simple terms, the rotor has widely spaced projections 20, of which there are only six on each rotor and hence the circumferential spacing between these is large. Likewise, the axial spacing between rotors as shown in Fig 2 is correspondingly large. No possibility exists for clod-holding in order to produce a crushing effect. EP 0 338 646 A2 has a similar disclosure of a rotor with ten projections.

Examples of other implements comprising rotors incorporating projecting elements are disclosed in :
GB 304,330 (Laubain)
GB 722,000 (Harry Ferguson Inc)
GB 1,401,800 (McCoomb)

Of the above specifications, GB 330 discloses a rolling harrow in which the rotor is shown in Fig 1 and has four outwardly tapering finger elements mounted on each individual rotor and the disposition of the rotors is shown in Figs 2 and 3. The mode of operation is purely a particle size reduction on the basis of impact since no possibility exists of any crushing effect because the spaces available for clod movement preclude all possibility of clod holding.

Much the same applies to the GB 000 specification which shows a rotor for a rotary hoe. No drawings are provided to show the lateral spacing of the individual rotors but it is clear that a rotary hoe is intended to have a hoeing effect and has the traditional spacing of the rotors accordingly and clod crushing is likewise precluded.

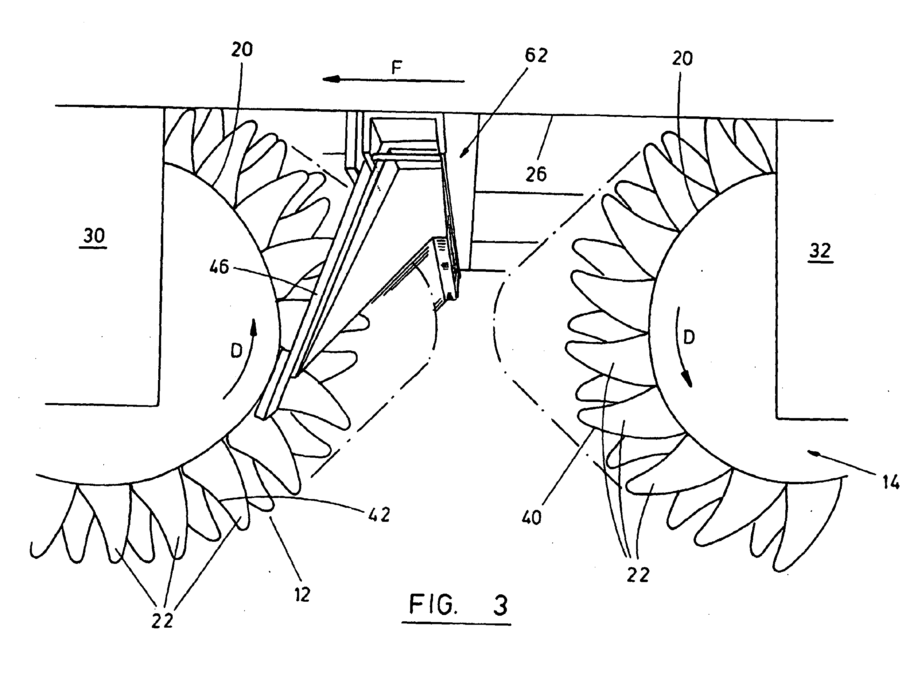

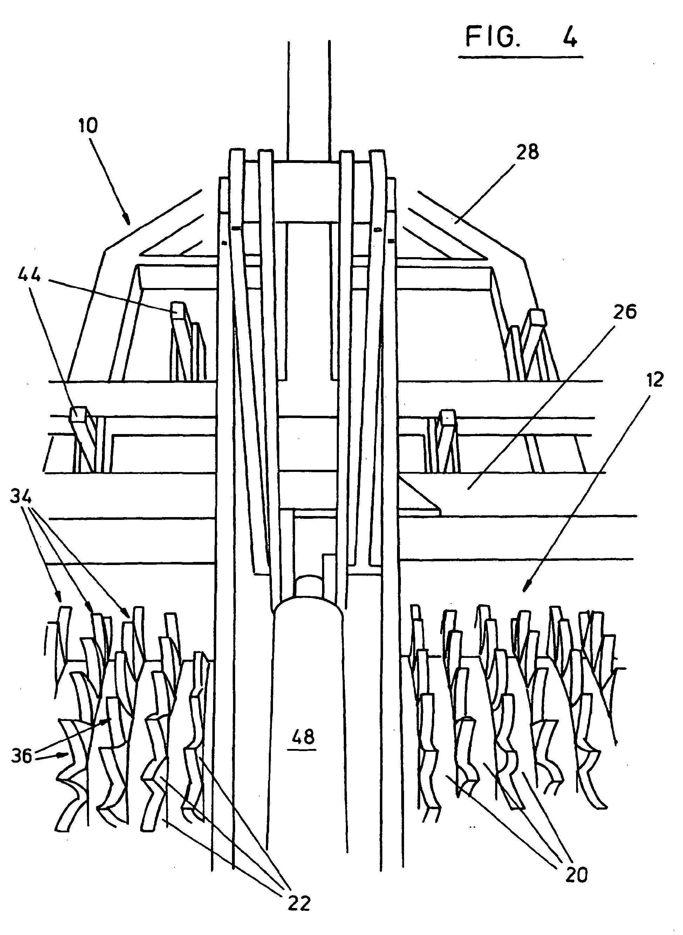

Much the same applies in relation to the disclosure in the GB 800 specification which shows a cultivating implement in which individual rotors have the construction shown in Fig 4 ie a generally star-shaped arrangement comprising four projecting fingers and despite the reasonably close disposition of these shown in the plan view of the gang shown in Fig 2, and the end view seen in Fig 3, it is clear that the possibility of clod crushing does not arise since the small number of individual projections on each rotor coupled with the absence of a central drum to contain inward movement means that this implement always has a simple soil-steering effect (as indeed is intended for its inter-row crop cultivation tasks) rather than a clod crushing effect.

With regard to the dimension parameters which enable the clod-crushing rotor of the present invention to produce its clod-crushing effect, the following applies. The structure which defines the clod-receiving recesses is provided by projecting elements. These are formed in the embodiments as hardened steel fabrications (in the sense of having been produced by a steel cutting and shaping technique). Corresponding castings could be employed, and in such a case the projecting elements may have outwardly tapering side faces (in addition to their leading and trailing edges) so that the projecting elements have sharper points and define additional recess space between one element and the next. The projecting elements are disposed in circumferentially-extending rows and project outwardly from the central drum of the rotor. In terms of actual construction, the individual rows of projections are spaced apart by individual rings (forming the drum) at suitable spacings.

As regards dimensional data relating to the rotor, the following guidelines apply to the embodiments of the invention described below :
1) The number of clod recess-defining projecting elements per row may be from 15 to 40;
2) The tip spacing between the outer ends of successive projecting elements may be from 65 to 115 millimetres;
3) The base spacing between successive projections may be up to 24 millimetres and usually in the range of 6 to 24 millimetres;
4) The thickness of each projecting element (these being usually fabricated from flat steel plate) may be from 10 to 50 millimetres;
5) The drum size (for the individual annular rings which separate the rows of projecting elements) may be from about 300 millimetres to about 1000 millimetres in diameter;
6) The axial spacing (measured between the adjacent and facing surfaces of successive rows of projecting elements on the rotor may be in the range of 25 to 75 millimetres; and
7) In relation to the above-disclosed data, the rotor is capable of dealing with substantially any size of soil clods. Where the clods are large, the clods are gripped in and extend between a plurality of the recesses, which nethertheless exert a crushing and weakening effect on the clod material. The longitudinal extent of the projecting elements determines the depth to which the rotor acts within the soil being treated.

In relation to the central drum structure, it is not essential that this be of strictly drum-like format although it is expected that rings forming a drum will be the most practical form for this structure in terms of separating the individual rows of projecting elements. The main functional requirement of the drum or other structure is that it provides an inhibiting effect in relation to inward movement of the clods during the crushing process so that, effectively, the clods are forced to crack or otherwise shatter because the rotor structure prevents inward or lateral movement. Accordingly it might be possible to provide non drum-like structures which provide an adequately anvil-like effect.

As regards the disposition of the projecting elements, although it is convenient to provide these in discreet rows separated by rings forming the drum, it might be possible to adopt an alternative (more generally or uniformly brush-like) fabricated format in which the projecting elements were not strictly in rows while still being sufficiently closely spaced to define the necessary clod-receiving recesses. Indeed, if the projecting elements themselves each had an outwardly diverging inner end, then these inner ends might co-operate to inhibit inward clod movement and thereby remove the need for a separate drum.

With regard to the general structure of the implement, in the embodiment the implement comprises two rotor gangs disposed in series, one in front of the other and at right angles to the travel direction in normal usage. Of course, the implement could be semi-mounted or even fully mounted on the tractor hitch linkage. In some circumstances it may be beneficial to adopt a non right angle disposition of the rotor or rotors with respect to the travel direction. One, two or even three or more rotors could be employed depending upon the soil conditions to be encountered and cost and weight factors. When so ganged in series, the rotors may be provided with progressively more tightly-packed projecting elements so as to accommodate the progressively decreasing sizes of the soil clods or particles.

In the fully trailed implement disclosed in the embodiments, provision is made for varying the weight applied to the individual rotors so that greater or lesser clod crushing is effected by the front or the rear rotor, according to observed results as work progresses. For this purpose, the implement hitching arrangement employs a drawbar which is trailed at its forward end from the tractor and at its rearward end is pivotally connected to the implement frame about a transverse axis. An hydraulic ram acts between the drawbar and a raised portion on the implement frame so that, by retraction of the ram, a force tending to pivot the implement frame relative to the drawbar exerts a generally lifting effect on the rearward portion of the frame so as to transfer weight onto the front rotor.

Regarding the weight of the implement, this is chosen to be the maximum consistent with acceptable material costs and transportability. Implement weight can be increased by means of the usual expedients of add-on concrete weights or, in this case, the filling of the rotors (which in such a case therefore require to be constructed in water-tight format) with water. In the embodiments, the implement has a weight of approximately 1.5 tonnes per metre of implement width.

To assist the interaction between the implement and the soil, the implement is provided with clod-lifting elements in the form of tines adapted to enter the soil ahead of the rotors in use and to raise clods for crushing by the rotors.

It will be understood that by virtue of the inherent clod-crushing nature of the rotors, there is an inevitable tendency for at least small amounts of soil to become compacted into the inwardly tapering recesses of the rotor and thereby to inhibit the clod crushing effect which it exerts. For this purpose, scraper means is provided which is mounted on the implement frame and extends into the spaces between successive rows of the projecting elements. The disposition of the scraper means with respect to the projecting elements is chosen to minimise power consumption by the scraper elements. This is achieved as follows. The projecting elements themselves have a generally curved format, being generally finger shaped, tapering outwardly, and being curved in a direction such that the curved and tapering outer end of each projection extends in a generally trailing (as opposed to a leading) direction with respect to rotor rotation during use. As a result of this, it is the convex curved side of each projection which nominally engages the surface of the soil as the rotor rotates in use, and the concave side of each projection is (by virtue of the elements' curvature) slightly on the inner side of the structure in the region of soil contact. The arrangement of the scraper elements is such that they tend to push or scrape material from between the rows of projecting elements from the inner narrow end of the recess (defined between successive projections) towards the outer wider end thereof.

In practice this means that the scraper elements are located, in use, on the rearward side of the rotor as opposed to its forward side.

It is to be understood however that the disposition of the curvature or angular inclination of the projecting elements may not necessarily be in the above-discussed direction but may be in the opposite direction or indeed purely radial for certain purposes and the rotor may comprise a mixture of such directions to contribute to an overall composite or hybrid effect on the soil.

Embodiments of the inventions will now be described by way of example with reference to the accompanying drawings in which :

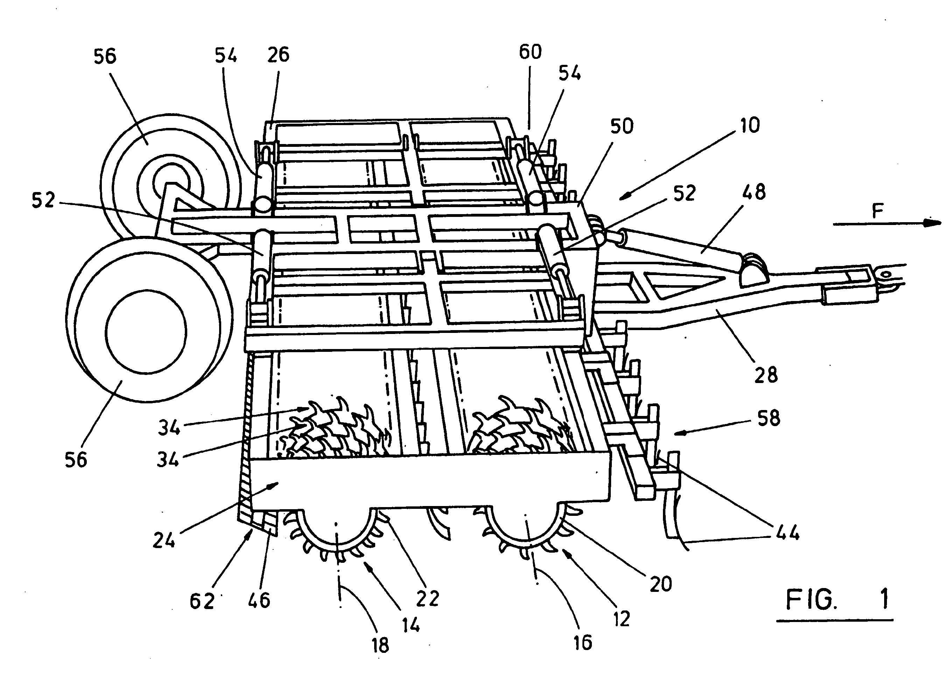

Fig 1 shows a perspective view of a first embodiment of the invention as viewed from above and to one side;
Fig 2 shows a similar perspective view of a second embodiment of the invention incorporating somewhat modified hitching arrangements, but this view showing in more detail the general arrangement of the rotors and their projecting clod-receiving elements;
Fig 3 shows a further perspective view of a further embodiment, the direction of viewing being closer to the rotors and more or else at ground level and looking axially of the rollers lengthwise thereof through the gap between them and showing the scraper elements for removing soil material from the rotors; and
Fig 4 shows a further perspective view of a fourth embodiment, the direction of viewing being from above and showing the drum-like structure of one of the rotors and its projecting elements in association therewith. Also shown in the foreground is a hydraulic ram used for weight transfer purposes.

As shown in the drawings, an agricultural implement 10 adapted to carry out soil particle size reduction in the form of clod-crushing comprises a pair or rotors 12, 14 each mounted to rotate, in use, about a respective generally horizontal axis 16, 18.

Each rotor comprises a central generally drum-like structure 20, the drum having projecting elements 22 adapted to contribute in use to the clod crushing effect to be more fully described below.

Means 24 to rotate the rotors 12, 14 is provided comprising an implement frame 26 and a drawbar 28, whereby implement 10 is drawn in use in the direction F of normal forward motion, thereby causing rotors 12, 14 to rotate in the directions shown, by virtue of the rotors being mounted on respective end bearings carried by mounting plates 30, 32 at each end thereof - see Figs 2 and 3.

The projecting elements 22 are disposed in a plurality of rows 34 (see Fig 4) at axially spaced intervals along the axial length of the drum like structure 20.

Rotors 12, 14 are constructed to act, in use, as clod-crushing rotors, as opposed to clod-cutting or clod-impacting rotors. For this purpose, the rotors define clod-receiving recesses 36 between the projecting elements 22. In these recesses 36 clods 38 are received and are crushed by the weight of the rotor and associated structures.

The clod-recess-defining projecting elements 22 in one row 34 of same define the limits of the recesses 36 in the circumferential direction of the rotor between adjacent edges of successive pairs of such projecting elements in the row. Moreover, the clod-recess-defining projecting elements define the limits of the recesses in the axial direction of the rotor likewise, such limits being defined between at least one of the projecting elements in each of the two adjacent rows 34 of projecting elements 22 at each side of the one particular such row.

As perhaps best shown in Figs 2, 3 and 4 the clod-recess-defining-projecting elements 22 are of generally outwardly-tapering finger-like format whereby the clod-receiving recesses 36 are of correspondingly generally radially inwardly-tapering form as viewed in the axial direction of the rotors 12, 14 and as defined between the mutually converging edges 40, 42 of the projecting elements.

As can be seen in all of the figures of the drawings, the projecting elements 22 extend outwardly, as measured in a radial direction from the drum 20 a distance which is less than the overall radius of the drum. This can be seen by simple inspection in Fig 3. The projecting elements may be somewhat longer and even up to the radius of the drum in some cases.

As shown in Figs 2 and 3 of the drawings, the projecting elements 22 are disposed relative to each other so as to form a generally toothed brush-like format of the rotors 12, 14 as viewed from above and to one side (as in Figs 2 and 3) in which the rigid projections 22 (forming the teeth of the brush) are disposed in a generally cylindrical format and defined between them the clod-receiving recesses 36.

Projecting elements 22 are of generally curved form having their mutually converging convex edges 40 and concave edges 42 disposed as shown. The convex edge 40 is, in use, effectively the leading edge with respect to the direction D of rotation of the rotors 12, 14.

Clod lifting elements 44 in the form of tines are mounted on the implement frame 26 so as to enter the soil ahead of the rotors 12, 14 in use and thereby raise clods for crushing by the rotors.

Scraper elements 46 (see Figs 1 and 3) are mounted to enter between the rows 34 of projecting elements 22 so that soil is removed from between the projecting elements by movement of the scraper elements in the direction (due to the curvature of those elements) from the inward narrow end of the recesses 36 towards the outer and wider end thereof.

Means is provided to vary the proportion of the downward loading carried by each of the rotors 12, 14 in accordance with conditions during use. For this purpose drawbar 28 is pivotally connected to the implement frame 26 about a generally horizontal transverse axis (not shown) whereby (effectively) the drawbar can pivot up and down relative to the frame. A hydraulic ram 48 acts between drawbar 28 and a raised portion 50 of frame 26. When ram 48 is retracted, this tends to cause lifting of the rear portion of implement frame 26 (because the front portion of drawbar 28 is maintained at a fixed height by the tractor coupled thereto) thereby transferring weight from the rear rotor 14 to the front rotor 12.

Turning now to other features of the construction and operation of the implement 10, these are as follows.

In Fig 1, the other main constructional feature shown is the facility for width-reduction for transport purposes. This is achieved by means of two pairs of gang-folding rams 52, 54 which fold the lateral side halves of implement frame 26 inwardly and upwardly about a generally horizontal fore/aft axis (not shown) to a relatively narrow upright position for transport purposes in which the implement 10 is carried on rear transport wheels 56.

As also shown in Fig 1, the clod lifting elements or tines 44 are arranged in two banks 58, 60 disposed in front of their respective rotors 12, 14.

Each rotor has its own corresponding bank 62 of scraper elements 46. For simplicity of illustration, only one of these banks is shown, namely the one which acts in relation to the rear rotor 14, and for clarity of illustration it is shown not inter-engaging with the projecting elements 22, but merely at the relevant side (the rear side) of its rotor for relatively low power consumption, as explained above. One disposition of the scraper elements 46 in relation to the rotors is seen in Figs 2 and 3. The preferred position is just above ground level so as to remove crushed material with minimum power consumption. Fig 1 shows this disposition in respect of bank 62 of scraper elements 46, the scraper elements being supported on a suspended bar just above ground level. In Fig 3, it will be noted that for economy of illustration only the initial few rows of projecting elements have been shown, the remainder of the rotors being indicated by chain dotted lines. It will be noted that the scraper elements are of substantial construction and mounted as a bank on the corresponding transverse beam structure, which extends longitudinally of the rotor of implement frame 26.

## Claims

1. A clod crusher (10) adapted to carry out soil particle size reduction, said clod crusher comprising :
a) a rotor (12) mounted to rotate, in use, about a generally horizontal axis;
b) said rotor (12) comprising a central generally drum-like structure (20);
c) said drum (20) having projecting elements (22) adapted to contribute in use to said soil particle size reduction of said rotor (12); and
d) means to rotate said rotor (12) in use, said means for rotating said rotor (12) in use comprising a mounting structure (30) for said rotor whereby it is caused to rotate by virtue of contact with the soil as said mounting structure (30) is moved relative to the soil during use, without requiring a drive (such as a pto drive) to rotate the rotor;
e) said projecting elements (22) being disposed in a plurality of rows in axially spaced intervals along the length of said drum;
f) said rotor (12) being constructed to act, in use, as a clod-crushing rotor (as opposed to a clod-cutting or clod-impacting rotor) and defining clod-receiving and holding recesses (36) between said projecting elements (22), in which recesses (36) clods in use are received and held and crushed inwardly by the weight of the rotor (12) and associated structures;
g) said clod-recess-defining projecting elements (22) in one row defining the limits of said recesses (36) in the circumferential direction of the rotor between the adjacent edges of successive pairs of such projecting elements (22) in the row, and said clod-recess-defining projecting elements (22) also defining the limits of said recesses (36) in the axial direction of the rotor (36) between at least one such projecting element (22) in each of the two adjacent rows of projecting elements (22) at each side of said one row;
**characterised by**
h) said clod-recess-defining elements (22) being of elongate generally outwardly-tapering finger-like form whereby said clod recesses (36) are of correspondingly elongate generally radially inwardly tapering form as viewed in the axial direction of the rotor (12) and as defined between the mutually converging edges (40) (42) of said projecting elements (22); and
i) the ratio of the axial spacing of successive rows of said clod-recess-defining elements (22) to the thickness of each of said clod-recess-defining elements (22) not exceeding 7.5.

2. A clod crusher (10) according to claim 1 **characterised by** the thickness of each projecting element (22) being between 10 and 50 millimetres and the axial spacing of successive rows of projecting elements (22) being between 25 and 75 millimetres.

3. A clod crusher (10) according to claim 1 or 2 **characterised by** the ratio of the tip spacing between outer ends of successive projecting elements and the base spacing between successive projections not exceeding 19.

4. A clod crusher (10) according to any preceding claim **characterised by** the number of clod-recess-defining projections (22) being between 15 and 40.

5. A clod crusher (10) according to any preceding claim **characterised by** said clod-recess-defining projecting elements (22) extending outwardly (measured in a radial direction from said drum) by a distance less than or equal to the overall radius of said drum (20).

6. A clod crusher (10) according to any preceding claim **characterised by** said projecting elements (22) being disposed relative to each other so as to form a generally toothed brush-like format of said rotor (12) as viewed from above and to one side in which said rigid projecting elements (22) (forming the teeth of said brush) are disposed in a generally cylindrical format and defining between them said clod-receiving-recesses(36).

7. An implement (10) according to any one of the preceding claims **characterised by** said projecting elements (22) being generally curved in form and having mutually converging convex (40) and concave (42) edges.

8. A clod crusher (10) according to claim 7 **characterised by** said projecting elements (22) being disposed so that the convex edges (40) of said projecting elements (22) are the leading edges with respect to rotation of said rotor (12) in use.

9. A clod crusher (10) according to claim 7 or 8 **characterised by** the convex edge (40) having an entirely convex configuration and the concave edge (42) having an entirely concave configuration.

10. A clod crusher (10) according to any preceding claim **characterised by** said projecting elements (22) comprising such elements extending outwardly generally at an inclination with respect to a radius to said rotor (12) at the inner end of each projecting element (22).

11. A clod crusher (10) according to claim 10 **characterised by** said projecting elements (22) comprising elements inclined in opposite directions with respect to said radius on said rotor (12), alternately or otherwise.

12. A clod crusher (10) according to any one of claims 1 to 11 **characterised by** scraper elements (46) mounted to enter between the rows of said projecting elements (22) to remove soil therefrom during use so that said soil is removed between successive rows of projecting elements (22) by relative movement between said elements and said fixed scraper elements (46) in which the latter move from the inner narrow end of said clod recesses (36) towards the outer wider end thereof.

13. A clod crusher (10) according to any one of the preceding claims **characterised by** said implement comprising a pair of generally mutually parallel clod-crushing rotors (12) (14) of similar form mounted one in front of the other and means being provided to vary the proportion of downward loading carried by each of said rotors in accordance with conditions.

14. A clod crusher (10) according to any preceding claim **characterised by** said projecting elements (22) having outwardly-tapering side faces so as to define additional holding recess space between the rows of said elements.

15. A method of operating a clod crusher (10) adapted to carry out soil particle size reduction, the method comprising providing a rotor (12) with projecting elements (22) disposed in a plurality of rows in axially spaced intervals along the length of the rotor (12) adapted in use to define clod-receiving recesses (36) therein, said clod-recess-defining projecting elements (22) in one row defining the limits of said recesses (36) in the circumferential direction of the rotor between the adjacent edges of successive pairs of such projecting elements (22) in the row, and said clod-recess-defining projecting elements (22) also defining the limits of said recesses (36) in the axial direction of the rotor (36) between at least one such projecting element (22) in each of the two adjacent rows of projecting elements (22) at each side of said one row; and the method comprising causing clods to be received in said recesses (36) and to be crushed inwardly by the weight of the rotor (12) and associated structures as the rotor (12) rotates in use, **characterised by**
providing the projecting elements (22) with a ratio of the axial spacing of successive rows of said clod-recess-defining elements (22) to the thickness of each of said clod-recess-defining elements (22) not exceeding 7.5.

## Patentansprüche

1. Erdbrocken-Zerkleinerer, der dazu eingerichtet ist, eine Erdpartikel-Größenverringerung auszuführen, wobei der Erdbrocken-Zerkleinerer enthält:
a) einen Rotor (12), der so angebracht ist, dass er sich in Verwendung um eine im wesentlichen horizontale Achse dreht;
b) wobei der Rotor (12) eine zentrale, im wesentlichen trommelähnliche Struktur (20) hat;
c) und die Trommel (20) über hervorstehende Elemente (22) verfügt, die dazu eingerichtet sind, bei Verwendung zur Größenverringerung des Rotors (12) beizutragen; sowie
d) eine Einrichtung, die den Rotor (12) bei Verwendung dreht, wobei die Einrichtung, die den Rotor in Verwendung dreht, einen Montageaufbau (30) für den Rotor enthält, wodurch bewirkt wird, dass sich dieser aufgrund eines Kontaktes mit der Erde dreht, wenn der Montageaufbau (30) bei Verwendung relativ zur Erde bewegt wird, ohne dass ein Antrieb (wie etwa ein Zapfwellenantrieb) erforderlich ist, der den Rotor dreht;
e) wobei die hervorstehenden Elemente (22) in einer Vielzahl von Reihen in axial beabstandeten Intervallen entlang der Länge der Trommel angeordnet sind;
f) der Rotor (12) derart aufgebaut ist, dass er sich bei Verwendung wie ein Brocken-Zerkleinerungsrotor (im Gegensatz zu einem Brocken-Schneid- oder Brocken-Aufschlagrotor) verhält und Brocken-Aufnahme- sowie Halteaussparungen (36) zwischen den hervorstehenden Elementen (22) begrenzt, wobei in diesen Aussparungen bei Verwendung Brocken aufgenommen und durch das Gewicht des Rotors (12) sowie zugehörige Konstruktionen nach innen zerkleinert werden und
g) die brockenaussparungsbegrenzenden hervorstehenden Elemente (22) in einer Reihe die Grenzen der Aussparungen (36) in der Umfangsrichtung des Rotors zwischen den benachbarten Kanten aufeinander folgender Paare derartiger hervorstehender Elemente (22) in der Reihe begrenzen und die brockenaussparungsbegrenzenden hervorstehenden Elemente (22) zudem die Grenzen der Aussparungen (36) in der axialen Richtung des Rotors (36) zwischen wenigstens einem derartigen hervorstehenden Element in jeder der beiden benachbarten Reihen der hervorstehenden Elemente (22) auf jeder Seite der einen Reihe festlegen,
**dadurch gekennzeichnet, dass**
h) die brockenaussparungsbegrenzenden Elemente (22) eine längliche, im wesentlichen nach außen abgeschrägte, fingerähnliche Form haben, wobei die Brockenaussparungen (36) eine entsprechende längliche, im wesentlichen radial nach innen abgeschrägte Form haben, wenn sie in der Achsrichtung des Rotors (12) betrachtet werden und wie sie zwischen den wechselseitig konvergierenden Kanten (40) (42) der hervorstehenden Elemente (22) begrenzt sind; und
i) das Verhältnis des axialen Abstandes aufeinander folgender Reihen der brockenaussparungsbegrenzenden Elemente (22) zur Dicke jedes der brockenaussparungsbegrenzenden Elemente (22) 7,5 nicht übersteigt.

2. Erdbrocken-Zerkleinerer (10) nach Anspruch 1, **dadurch gekennzeichnet, dass** die Dicke jedes hervorstehenden Elementes (22) zwischen 10 und 50 mm liegt und der axiale Abstand aufeinander folgender Reihen hervorstehender Elemente (22) zwischen 25 und 75 mm liegt.

3. Erdbrocken-Zerkleinerer (10) nach Anspruch 1 oder 2, **dadurch gekennzeichnet, dass** das Verhältnis des Spitzenabstandes zwischen Außenenden aufeinander folgender hervorstehende Elemente und dem Basisabstand zwischen aufeinander folgenden Vorsprüngen 19 nicht überschreitet.

4. Erdbrocken-Zerkleinerer (10) nach einem der vorhergehenden Ansprüche, **dadurch gekennzeichnet, dass** die Zahl der brockenaussparungsbegrenzenden Vorsprünge (22) zwischen 15 und 40 liegt.

5. Erdbrocken-Zerkleinerer (10) nach einem der vorhergehenden Ansprüche, **dadurch gekennzeichnet, dass** sich die brockenaussparungsbegrenzernden hervorstehenden Elemente (22) (gemessen in einer radialen Richtung von der Trommel) um einen Abstand kleiner oder gleich dem Gesamtradius der Trommel (20) nach außen erstrecken.

6. Erdbrocken-Zerkleinerer (10) nach einem der vorhergehenden Ansprüche, **dadurch gekennzeichnet, dass** die hervorstehenden Elemente (22) derart relativ zueinander angeordnet sind, dass sie von oben und von der Seite betrachtet ein im wesentlichen bürstenähnliches Format das Rotors (12) bilden, wobei die starren hervorstehenden Elemente (22) (die die Zähne der Bürste bilden) in einem im wesentlichen zylindrischen Format angeordnet sind und zwischen sich die brockenaufnehmenden Aussparungen (36) bilden.

7. Vorrichtung (10) nach einem der vorhergehenden Ansprüche, **dadurch gekennzeichnet, dass** die hervorstehenden Elemente (22) eine im wesentlichen gekrümmte Form haben und wechselseitig konvergierende konvexe (40) und konkave (42) Kanten aufweisen.

8. Erdbrocken-Zerkleinerer (10) nach Anspruch 7, **dadurch gekennzeichnet**, das die hervorstehenden Elemente (22) derart angeordnet sind, dass die konvexen Kanten (40) der hervorstehenden Elemente (22) die vorderen Kanten im Bezug auf die Drehung des Rotors (12) während der Verwendung sind.

9. Erdbrocken-Zerkleinerer (10) nach Anspruch 7 oder 8, **dadurch gekennzeichnet, dass** die konvexe Kante (40) eine vollständig konvexe Konfiguration hat und die konkave Kante (42) eine vollständig konkave Konfiguration hat.

10. Erdbrocken-Zerkleinerer (10) nach einem der vorhergehenden Ansprüche, **dadurch gekennzeichnet, dass** die hervorstehenden Elemente (22) derartige Elemente enthalten, die sich nach außen im wesentlichen in einer Neigung im Bezug auf einen Radius des Rotors (12) am inneren Ende jedes hervorstehenden Elementes (22) erstrecken.

11. Erdbrocken-Zerkleinerer (10) nach Anspruch 10, **dadurch gekennzeichnet, dass** die hervorstehenden Elemente (22) Elemente enthalten, die in entgegengesetzten Richtungen im Bezug auf den Radius an dem Rotor (12) alternierend oder in anderer Art geneigt sind.

12. Erdbrocken-Zerkleinerer (10) nach einem der Ansprüche 1 bis 11, **gekennzeichnet durch** Schabelemente (46), die angebracht sind, um zwischen die Reihen der hervorstehenden Elemente einzutreten, um aus diesen während der Verwendung Erde zu entfernen, so dass Erde zwischen aufeinander folgenden Reihen der hervorstehenden Elemente (22) **durch** eine Relativbewegung zwischen den Elementen und den feststehenden Schabelementen (46) entfernt wird, wobei sich letztgenannte vom inneren schmalen Ende der Erdbrockenaussparungen (36) zum äußeren breiteren Ende derselben bewegen.

13. Erdbrocken-Zerkleinerer (10) nach einem der vorhergehenden Ansprüche, **dadurch gekennzeichnet, dass** die Vorrichtung zwei im wesentlichen wechselseitig parallele Erdbrocken-Zerkleinerungsrotoren (12) (14) ähnlicher Form enthält, von denen einer vor dem anderen angebracht ist, und Einrichtungen vorgesehen sind, die den Anteil der abwärts gerichteten Ladung, die von jedem der Rotoren getragen wird, gemäß Bedingungen variieren.

14. Erdbrocken-Zerkleinerer (10) nach einem der vorhergehenden Ansprüche, **dadurch gekennzeichnet, dass** die hervorstehenden Elemente (22) nach außen abgeschrägte Seitenflächen haben, um so einen zusätzlichen Halteaussparungszwischenraum zwischen den Reihen der Elemente zu bilden.

15. Verfahren zum Betreiben eines Erdbrocken-Zerkleinerers (10), der dazu eingerichtet ist, eine Größenverringerung von Erdpartikeln auszuführen, wobei das Verfahren umfasst: Bereitstellen eines Rotors (12) mit hervorstehenden Elementen (22), die in einer Vielzahl von Reihen in axial beabstandeten Intervallen entlang der Länge des Rotors (12) angeordnet und dazu eingerichtet sind, bei Verwendung darin erdbrockenaufnehmende Aussparungen (36) zu begrenzen, wobei die brockenaussparungsbegrenzenden hervorstehenden Elemente (22) in einer Reihe die Grenzen der Aussparungen (36) in der Umfangsrichtung des Rotors zwischen den benachbarten Kanten aufeinander folgender Paare derartiger hervorstehender Elemente (22) in der Reihe begrenzen und die brockenaussparungsbegrenzenden hervorstehenden Elemente (22) zudem die Grenzen der Aussparungen (36) in der axialen Richtung des Rotors (36) zwischen wenigstens einem derartigen hervorstehenden Element (22) in jeder der beiden benachbarten Reihen hervorstehender Elemente (22) auf jeder Seite der einen Reihe definieren und das Verfahren beinhaltet zu bewirken, dass die Erdbrocken in den Aussparungen (36) aufgenommen und nach innen durch das Gewicht des Rotors (12) und zugehörige Konstruktionen zerkleinert werden, wenn sich der Rotor (12) bei Verwendung dreht, **gekennzeichnet durch**
Versehen der hervorstehenden Elemente (22) mit einem Verhältnis des axialen Abstandes aufeinander folgender Reihen der brockenaussparungsbegrenzenden Elemente (22) zur Dicke jedes der brockenaussparungsbegrenzenden Elemente (22), das 7,5 nicht überschreitet.

## Revendications

1. Émotteuse (10) adaptée pour exécuter une réduction de taille de particules de sol, ladite émotteuse comprenant :
a) un rotor (12) monté pour tourner, durant l'utilisation, autour d'un axe généralement horizontal ;
b) ledit rotor (12) comprenant une structure centrale généralement similaire à un tambour (20) ;
c) ledit tambour (20) comportant des éléments saillants (22) adaptés pour contribuer, durant l'utilisation, à ladite réduction de taille de particules de sol dudit rotor (12) ; et
d) des moyens pour faire tourner ledit rotor (12) durant l'utilisation, lesdits moyens pour faire tourner ledit rotor (12) durant l'utilisation comprenant une structure de montage (30) pour ledit rotor, moyennant quoi il est forcé de tourner grâce au contact avec le sol alors que ladite structure de montage (30) est déplacée par rapport au sol au cours de l'utilisation, sans nécessiter d'entraînement (tel qu'un entraînement à prise de force) pour faire tourner le rotor ;
e) lesdits éléments saillants (22) étant disposés dans une pluralité de rangées dans des intervalles espacés de façon axiale sur la longueur dudit tambour ;
f) ledit rotor (12) étant construit pour servir, durant l'utilisation, de rotor d'émottage (par opposition à un rotor de coupe de mottes ou d'impact de mottes) et définissant des évidements de réception et de retenue de mottes (36) entre lesdits éléments saillants (22), dans lesquels évidements (36), des mottes, durant l'utilisation, sont reçues et retenues et écrasées vers l'intérieur par le poids du rotor (12) et de structures associées ;
g) lesdits éléments saillants définissant des évidements de mottes (22) dans une première rangée définissant les limites desdits évidements (36) dans la direction circonférentielle du rotor entre les bords adjacents de paires successives de ces éléments saillants (22) dans la rangée, et lesdits éléments saillants définissant des évidements de mottes (22) définissant également les limites desdits évidements (36) dans la direction axiale du rotor (36) entre au moins un tel élément saillant (22) dans chacune des deux rangées adjacentes d'éléments saillants (22) de chaque côté de ladite première rangée ;
**caractérisée en ce que**
h) lesdits éléments définissant des évidements de mottes (22) présentent une forme oblongue en forme de doigt s'effilant généralement vers l'extérieur, moyennant quoi lesdits évidements de mottes (36) présentent une forme correspondante oblongue s'effilant généralement vers l'intérieur de façon radiale telle qu'elle est vue dans la direction axiale du rotor (12) et telle qu'elle est définie entre les bords mutuellement convergents (40) (42) desdits éléments saillants (22) ; et
i) le rapport de l'espacement axial de rangées successives desdits éléments définissant des évidements de mottes (22) par rapport à l'épaisseur de chacun desdits éléments définissant des évidements de mottes (22) ne dépassant pas 7,5.

2. Émotteuse (10) selon la revendication 1, **caractérisée en ce que** l'épaisseur de chaque élément saillant (22) est comprise entre 10 et 50 millimètres et l'espacement axial de rangées successives d'éléments saillants (22) est compris entre 25 et 75 millimètres,

3. Émotteuse (10) selon la revendication 1 ou 2, **caractérisée en ce que** le rapport de l'espacement de pointe entre des extrémités extérieures d'éléments saillants successifs et l'espacement de base entre des saillies successives ne dépasse pas 19.

4. Émotteuse (10) selon une quelconque revendication précédente, **caractérisée en ce que** le nombre de saillies définissant des évidements de mottes (22) est compris entre 15 et 40.

5. Émotteuse (10) selon une quelconque revendication précédente, **caractérisée en ce que** lesdits éléments saillants définissant des évidements de mottes (22) s'étendent vers l'extérieur (mesurés dans une direction radiale à partir dudit tambour) selon une distance inférieure ou égale au rayon total dudit tambour (20).

6. Émotteuse (10) selon une quelconque revendication précédente, **caractérisée en ce que** lesdits éléments saillants (22) sont disposés les uns par rapport aux autres afin de former un format généralement similaire à une brosse dentée dudit rotor (12) tel qu'il est vu du dessus et sur un côté dans lequel lesdits éléments saillants rigides (22) (formant les dents de ladite brosse) sont disposés dans un format généralement cylindrique et définissent entre eux lesdits évidements de réception de mottes (36).

7. Émotteuse (10) selon une quelconque des revendications précédentes, **caractérisée en ce que** lesdits éléments saillants (22) présentent une forme généralement incurvée et comportent des bords convexes (40) et concaves (42) mutuellement convergents.

8. Émotteuse (10) selon la revendication 7, **caractérisée en ce que** lesdits éléments saillants (22) sont disposés de sorte que les bords convexes (40) desdits éléments saillants (22) sont les bords avant par rapport à la rotation dudit rotor (12) durant l'utilisation.

9. Émotteuse (10) selon la revendication 7 ou 8, **caractérisée en ce que** le bord convexe (40) possède une configuration entièrement convexe et le bord concave (42) possède une configuration entièrement concave.

10. Émotteuse (10) selon une quelconque revendication précédente, **caractérisée en ce que** lesdits éléments saillants (22) comprennent des éléments s'étendant vers l'extérieur généralement à une inclinaison par rapport à un rayon par rapport audit rotor (12) à l'extrémité intérieure de chaque élément saillant (22).

11. Émotteuse (10) selon la revendication 10, **caractérisée en ce que** lesdits éléments saillants (22) comprennent des éléments inclinés dans des directions opposées par rapport audit rayon sur ledit rotor (12), en alternance ou autrement.

12. Émotteuse (10) selon une quelconque des revendications 1 à 11, **caractérisée par** des éléments racloirs (46) montés pour entrer entre les rangées desdits éléments saillants (22) pour éliminer de la terre de ceux-ci au cours de l'utilisation de sorte que ladite terre soit éliminée entre des rangées successives d'éléments saillants (22) par un mouvement relatif entre lesdits éléments et lesdits éléments racloirs fixes (46) dans laquelle ces derniers se déplacent à partir de l'extrémité étroite intérieure desdits évidements de mottes (36) vers l'extrémité plus large extérieure de ceux-ci.

13. Émotteuse (10) selon une quelconque des revendications précédentes, **caractérisée en ce que** ladite émotteuse comprend une paire de rotors d'émottage parallèles de façon généralement mutuelle (12) (14) de forme similaire montés l'un devant l'autre et des moyens sont prévus pour varier la proportion de chargement descendant supporté par chacun desdits rotors conformément aux conditions.

14. Émotteuse (10) selon une quelconque revendication précédente, **caractérisée en ce que** lesdits éléments saillants (22) comportent des faces latérales s'effilant vers l'extérieur afin de définir un espace d'évidement de retenue supplémentaire entre les rangées desdits éléments.

15. Procédé de fonctionnement d'une émotteuse (10) adaptée pour exécuter une réduction de taille de particules de sol, le procédé comprenant l'étape consistant à fournir à un rotor (12) des éléments saillants (22) disposés dans une pluralité de rangées dans des intervalles espacés de façon axiale sur la longueur du rotor (12) adaptés, durant l'utilisation, pour définir des évidements de réception de mottes (36) dans ceux-ci, lesdits éléments saillants définissant des évidements de mottes (22) dans une première rangée définissant les limites desdits évidements (36) dans la direction circonférentielle du rotor entre les bords adjacents de paires successives de ces éléments saillants (22) dans la rangée, et lesdits éléments saillants définissant des évidements de mottes (22) définissant également les limites desdits évidements (36) dans la direction axiale du rotor (36) entre au moins un tel élément saillant (22) dans chacune des deux rangées adjacentes d'éléments saillants (22) de chaque côté de ladite première rangée ; et le procédé comprenant l'étape consistant à forcer des mottes à être reçues dans lesdits évidements (36) et à être écrasées vers l'intérieur par le poids du rotor (12) et de structures associées alors que le rotor (12) tourne, durant l'utilisation, **caractérisée par** l'étape consistant à :
fournir aux éléments saillants (22) un rapport de l'espacement axial de rangées successives desdits éléments définissant des évidements de mottes (22) par rapport à l'épaisseur de chacun desdits éléments définissant des évidements de mottes (22) ne dépassant pas 7,5.
